# EUROPEAN PATENT APPLICATION

(11) **EP 1 063 201 A1**
(43) Date of publication of application: **27.12.2000**
(21) Application number: 98959198.7
(22) Date of filing: 14.12.1998
(51) Int. Cl.: C02F 1/62, C02F 1/64, C02F 1/58

(54) **METHOD OF REMOVING HARMFUL IONS AND REMOVER FOR USE IN THE SAME**

(30) Priority: 15.12.1997 JP 36322097
(71) Applicant: JAPAN as Represented by DIRECTOR GENERAL OF AGENCY OF INDUSTRIAL SCIENCE AND TECHNOLOGY, Chiyoda-ku, Tokyo 100-0013 (JP); MITSUBISHI CORPORATION, Tokyo 100-8086 (JP); Tatsumi, Kenji, Tsukuba-shi, Ibaraki (JP); Wada, Shinji, Toride-shi, Ibaraki 302-0034 (JP)
(72) Inventor: TATSUMI, Kenji, Tsukuba-shi, Ibaraki 305-0035 (JP); WADA, Shinji, Toride-shi, Ibaraki 302-0034 (JP); YUKAWA, Yasuhiro, Tsukuba-shi, Ibaraki 300-3261 (JP)
(74) Representative: Rackham, Anthony Charles
(86) International application number: JP9805644
(87) International publication number: WO9931017

(57) **Abstract**

Described are a method of removing harmful ions such as copper, zinc, cadmium, chromium or lead contained in water efficiently and with a reduced amount of formation of sludge and a removing agent used therefor. The removing method is such that an anionic group-containing hydrophilic polymeric substance is dispersed in the water in an undissolved state, and the harmful ions are insolubilized while maintaining the hydrophilic polymeric substance in the undissolved state. The harmful ion removing agent is characterized in that the agent is a powder or liquid containing an anionic group-containing hydrophilic polymeric substance.

## Description

### BACKGROUND OF THE INVENTION

### Field of the Invention

This invention relates to a method of removing harmful ions contained in water and a removing agent used therefor.

### Background Art

For the purpose of removing harmful ions, particularly heavy metal ions, contained in water, it is known to add to the water a reagent capable of reacting with polyvalent cations to precipitate hydroxides thereof. Examples of known reagents include alkali metal compounds such as sodium hydroxide and alkaline earth metal compounds such as calcium hydroxide.

In the known method using such an alkaline reagent, the use of an alkali metal compound such as sodium hydroxide is desirable because the amount of a sludge (metal hydroxides) produced is small. However, since the sludge particles have a small particle size, it is difficult to separate the sludge. For this reason, an alkaline earth metal compound such as calcium hydroxide has been predominantly used, although there is a problem because the amount of the sludge produced is large.

It is, therefore, a prime object of the present invention to provide a method of removing harmful ions contained in water efficiently while reducing the amount of a sludge produced.

Another object of the present invention is to provide a removing agent for removing harmful ions contained in water.

Other objects will become apparent from the following description.

### DISCLOSURE OF THE INVENTION

The present inventors have made an extensive study with a view toward the accomplishment of the above objects and have completed the present invention.

In accordance with the present invention, there is provided a method of removing harmful ions contained in water, characterized in that an anionic group-containing hydrophilic polymeric substance is dispersed in said water in an undissolved state, and said harmful ions are insolubilized while maintaining said anionic group-containing hydrophilic polymeric substance in the undissolved state.

The present invention also provides a harmful ion removing agent for use in the above method for removing harmful ions, comprising a powder or a liquid containing an anionic group-containing hydrophilic polymeric substance.

The harmful ion removing agent (hereinafter also referred to simply as removing agent) for use in the above method for removing harmful ions comprises a powder or a liquid containing an anionic group-containing hydrophilic polymeric substance.

The anionic group-containing hydrophilic polymeric substance may be a water-soluble polymeric substance having anionic groups such as carboxyl groups, sulfonic acid groups or phosphoric acid groups and may be a naturally occurring product or a synthetic product. From the standpoint of environmental protection, the use of a biodegradable polymeric substance is preferred. Examples of such polymeric substances include polysaccharides such as alginic acid, gellan gum, xanthan gum, tragacanth gum, pectin, pectic acid, pectinic acid, carrageenan, gelatin, agar, anionic starch, propylene glycol ester of alginic acid, carboxymethyl cellulose, starch glycolic acid, cellulose glycolic acid, starch phosphoric acid and glactomannan; metal salts of polysaccharides; ethylenediaminetetracarboxylic acid (EDTA) or salts thereof; polyacrylic acid; copolymers of acrylamide and acrylic acid or salts thereof; and highly water-absorbing polymers, such as SUMIKAGEL (manufactured by Sumitomo Chemical Inc.), SANWET (manufactured by Sanyo Kasei Inc.), PREAPRE (manufactured by Showa Denko Inc.) and WAS (manufactured by Nichiden Kagaku Inc.).

In the present invention, the use of alginic acid or its salt is particularly preferred. In this case, it is preferred that the ratio (molar ratio) [M]/[G] of mannuronic acid (M) to guluronic acid (G), which constitute the alginic acid, be in the range of 0.1 to 4, more preferably 0.1 to 3. Alginic acid having a higher guluronic acid content exhibits better floc-forming properties by reaction with polyvalent cations. Illustrative of alginic acid salts are a sodium salt, a calcium salt, a magnesium salt and an aluminum salt.

The anionic group-containing hydrophilic polymeric substance is used in the form of a powder (including short fibers) or a liquid. In the case of powder, the average particle size is 10-500 µm, preferably 20-200 µm, more preferably 50-150 µm. When used in the form of a liquid, the anionic group-containing hydrophilic polymeric substance may be dispersed therein in an undissolved state. The liquid may be water, a mixture of water with an organic solvent or an organic solvent. Generally, the liquid is water or an aqueous solution of an organic solvent.

The anionic group-containing hydrophilic polymeric substance used as a main ingredient of the removing agent according to the present invention may be used singly or in the form of a mixture. In the case of a mixture, it is preferred that the mixture contain alginic acid or a salt thereof. The mixture containing alginic acid or a salt thereof may be a mixture of (i) alginic acid or a salt thereof with (ii) at least one hydrophilic polymeric substance selected from gellan gum, xanthan gum, pectin, pectic acid, pectinic acid and salts thereof, preferably with gellan gum. In the case where, for example, sodium alginate is used as a mixture with another anionic group-containing hydrophilic polymeric substance, the weight ratio [A]/[B] of the sodium alginate (A) to the another anionic group-containing hydrophilic polymeric substance (B) is 1 to 100, preferably 2 to 50.

It is preferred that the removing agent comprises a water-soluble, non-harmful, polyvalent metal compound. Examples of such compounds include iron salts, such as ferrous sulfate, ferric sulfate, ferrous chloride and ferric chloride, aluminum sulfate, aluminum chloride, calcium hydroxide, calcium chloride, magnesium sulfate, magnesium chloride and magnesium hydroxide. For reasons of storage stability and costs, the use of ferrous sulfate heptahydrate is preferred. These polyvalent metal compounds can form ionic bonds or chelates with the anionic group-containing hydrophilic polymeric substance, so that the solubility of the polymeric substance can be controlled. The amount of the polyvalent metal compound is not specifically limited and is appropriately selected according to the kinds and amounts of the metal ions dissolved in water, the pH of the water to be treated, etc. Generally, the polyvalent metal compound is used in an amount of 1-10,000 parts by weight, preferably 20-5,000 parts by weight, per 100 parts by weight of the anionic group-containing hydrophilic polymeric substance.

The removing agent according to the present invention preferably comprises a hydrophilic polymeric substance containing cationic groups. The hydrophilic polymeric substance containing cationic groups can contribute to increase of the size of flocs and may be, for example, chitosan, modified cationic polyacrylamide, dimethylaminoethyl ester of polyacrylic acid, dimethylaminoethyl ester of polymethacryic acid or polyethyleneimine. A polymeric substance having amino groups or cationic group (quaternary ammonium group, etc.), especially chitosan, is preferably used for the purpose of the present invention. In this case, chitosan is preferably used in conjunction with another hydrophilic polymeric substance containing cationic groups, such as dimethylaminoethyl ester of polyacrylic acid. Commercially available chitosan may be used. Alternatively, polymerized, crosslinked chitosan which has part of amino groups thereof converted to the following general formula (1)

-NH-R³-NR¹R² (1)

wherein R¹ and R² each represent a lower alkyl group and R³ represents a lower alkylene group, and which contains a crosslinking group represented by the following general formula (2)

-N=CH-[R⁴]ₙ-CH=N-

wherein R⁴ represents a lower alkylene group and n is 0 or 1, may be used. In this case, it is preferred that the amount of primary amines in the chitosan be 5-70 mole %, the amount of the substituted amino groups of the formula (1) be 20-70 mole % and the amount of the crosslinking groups of the general formula (2) be 0.2-50 mole % based on the glucosamine units of the chitosan. Such a crosslinked chitosan may be obtained by reacting chitosan with a substituted amino compound of the general formula (3)

X-R³-NR¹R² (3)

wherein R¹ and R² each represent a lower alkyl group, R³ represents a lower alkylene group and X represents a halogen atom, and then with a dialdehyde compound represented by the general formula (4)

OHC-[R⁴]ₙ-CHO

wherein R⁴ represents a lower alkylene group and n is 0 or 1.

The hydrophilic polymeric substance containing cationic groups is used in the form of a powder or an aqueous solution and is employed in an amount of 0.1-500 parts by weight, preferably 0.2-100 parts by weight per 100 parts by weight of the anionic group-containing hydrophilic polymeric substance. When chitosan is used in the form of an aqueous solution, an organic acid solution such as an acetic acid solution is preferably used, though an inorganic acid solution such as hydrochloric acid may be used.

The removing agent of the present invention preferably comprises a flocculating agent for coagulating flocs. Examples of the flocculating agents include inorganic flocculating agents such as calcium chloride, calcium bis(dihydrogenphosphate), ferrous chloride, ferric chloride, ferrous sulfate, ferric sulfate, aluminum sulfate and polyaluminum chloride; cationic organic flocculating agents such as cationic polyacrylamide, dimethylaminoethyl ester of polyacrylic acid, dimethylaminoethyl ester of polymethacrylic acid, polyethyleneimine and chitosan; nonionic organic flocculating agents such as polyacrylamide; and anionic organic flocculating agents such as polyacrylic acid, copolymers of acrylamide and acrylic acid and salts thereof.

The removing agent of the present invention preferably comprises a reducing agent capable of reducing harmful polyvalent ions to polyvalent ions having lower valence than said harmful polyvalent ions. Depending upon the kinds, some of the polyvalent cations can hardly form hydroxides. High valent cations, for example hexavalent Cr(VI), cannot be removed as such. Therefore, such high valent cations are preferably reduced with the reducing agent to a low valent cations, for example, trivalent Cr(III).

Any conventionally used reducing agent may be used. Illustrative of such reducing agents are ferrous sulfate, sodium sulfite, sodium bisulfite and sodium thiosulfate. As ferrous sulfate, heptahydrate is preferably used. It is also preferred to use a blend containing ferrous sulfate heptahydrate as a major agent and sodium sulfite or sodium bisulfite as an auxiliary agent. The reducing agent is used in an amount of 100-10,000 parts by weight, preferably 200-5,000 parts by weight, per 100 parts by weight of the anionic group-containing hydrophilic polymeric substance.

The removing agent of the present invention preferably comprises an agent for accelerating precipitation of flocs. Any substance may be used as the accelerating agent as long as it is in the form of insoluble particles having a high specific gravity. The specific gravity is at least 3, preferably at least 4.5 and the average particle diameter is 1-100 µm, preferably 30-70 µm. Illustrative of such accelerating agents are barium sulfate, metal fine particles (for example, Fe and Ti) and barytes. The accelerating agent is used in an amount of 1-60 parts by weight, preferably 5-30 parts by weight, per 100 parts by weight of the anionic group-containing hydrophilic polymeric substance.

Examples of suitable removing agent according to the present invention is removing agent A including the anionic group-containing hydrophilic polymeric substance and the water-soluble, non-harmful, polyvalent metal compound; removing agent B including the removing agent A and a reducing agent; and removing agent C including the removing agent B and a flocculating agent.

In removing harmful ions contained in water using the removing agent of the present invention, the removing agent is added to the water so that the anionic group-containing hydrophilic polymeric substance, which is the main ingredient thereof, is dispersed in the water in an undissolved state, with the harmful ions being insolubilized while maintaining the above state. The insolubilization of the harmful ions may be carried out by various methods according to the kinds of the harmful ions. When the harmful ions are polyvalent metal ions, there may be adopted a method in which the pH of the water to be treated is adjusted to such a value that the polyvalent metal ions are precipitated as hydroxides; a method in which the pH thereof is adjusted to such a value that the anionic groups of the polymeric substance can react with the polyvalent metal ions to form insoluble salts; and a method in which a metal ion insolubilizing agent (such as sodium sulfide and a heavy meal capturing agent) is added to the water. When the harmful ions are fluorine ions (F⁻), the fluorine ions can be insolubilized by reaction with calcium by addition of calcium salt or calcium hydroxide or by reaction with aluminum by addition of an aluminum-type flocculating agent. When the harmful ions are arsenious ions, arsenic ions, the insolubilization can be carried out by reaction with iron, aluminum, calcium or magnesium.

The insolubilized material produced from the harmful ions is in the form of fine flocs which are captured or adsorbed by the anionic group-containing hydrophilic polymeric substance dispersed in water in an undissolved state, thereby to form flocs having good separation efficiency.

After the insolubilization of the harmful ions has been completed, the polymeric substance dispersed in the water in the undissolved state is separated together with the insolubilized materials from the water by any known solid-liquid separation method such as by filtration, centrifugation or sedimentation. The treatment time for the removal of harmful ions from water according to the present invention is very short and is generally within 1 hour, specifically within 30 minutes. A treatment time of 3-10 minutes is sufficient depending upon waste water.

In the present invention, a water-soluble substance, such as alginic acid or a sodium salt thereof, may be used as the anionic group-containing hydrophilic polymeric substance. Even such a water-soluble substance can be smoothly used in the present invention. Namely, it is possible to disperse the water-soluble polymeric substance while preventing the dissolution thereof by adjusting the pH of the water to be treated or by adding a non-harmful polyvalent metal salt to the water, when the water-soluble polymeric substance in the form of a powder or a liquid (generally aqueous solution) is added to the water. Thus, the insolubilization of harmful ions and the solid-liquid separation may be carried out under conditions so that the polymeric substance is not completely dissolved. When the water to be treated is alkaline in nature, it is desirable to adjust the pH thereof in the range of 1-7, preferably 5 or less, more preferably 2-4, before the addition of the anionic group-containing hydrophilic polymeric substance or the removing agent. By maintaining the water to be treated in the above range, it is possible to maintain the anionic group-containing hydrophilic polymeric substance in the water in an undissolved state.

In performing the present invention by addition of the anionic group-containing hydrophilic polymeric substance to water, a water-soluble, non-harmful, polyvalent metal compound may added to the water, if necessary. The addition of such a polyvalent metal compound can prevent or retard the dissolution of the anionic group-containing hydrophilic polymeric substance.

In practicing the present invention, a hydrophilic polymeric substance containing cationic groups may be added, if necessary. The addition of such a hydrophilic polymeric substance containing cationic groups can form big flocs and can prevent the dissolution of harmful ions.

In practicing the present invention, a flocculating agent may be added, if necessary. The addition of such a flocculating agent can flocculate the anionic group-containing hydrophilic polymeric substance dispersed in water and the insolubilized material of harmful ions to form big flocs.

In practicing the present invention, an agent for accelerating precipitation of flocs may be added, if necessary. The addition of such a precipitation accelerating agent can make it possible to separate flocs from water.

In the removal of harmful ions contained in water by using the removing agent of the present invention, the removing agent in the form of a powder is preferably added as such. However, it is possible to add the removing agent in the form of an aqueous dispersion previously prepared by dispersing the removing agent together with a water-soluble non-harmful polyvalent metal compound in water. Respective ingredients of the removing agent can be added in the form of a mixture. Alternatively, these ingredients can be added simultaneously or successively. As typical examples, there may be adopted a method in which the anionic group-containing hydrophilic polymeric substance and the water-soluble non-harmful polyvalent metal compound are first added, followed by addition of, if necessary, the reducing agent and the hydrophilic polymeric substance containing cationic groups and addition of flocculating agent; and a method in which the hydrophilic polymeric substance containing cationic groups is first added, followed by addition of the anionic group-containing hydrophilic polymeric substance and the water-soluble non-harmful polyvalent metal compound and then addition of the flocculating agent. Adjustment of pH can be carried out before, after or during the addition of the removing agent.

When the removing agent is added into an acidic water, the anionic group-containing hydrophilic polymeric substance, which is the main ingredient thereof, is first added thereto. The water-soluble non-harmful polyvalent metal compound is added, if necessary. Further, the reducing agent is added, if necessary. Then, an alkali is added to maintain the pH of the water in the range of 6-14, preferably 7-10, and the whole mixture is stirred. As a result, hydroxides of polyvalent cations contained in the water are formed. In this case, part of the polyvalent cations is reacted with the anionic groups of the anionic groups-containing hydrophilic polymeric substance to form precipitates of insoluble salts of the polymeric substance. Further, part of the polyvalent cations forms precipitates by addition of an alkali such as sodium hydroxide. In this case, by adding the hydrophilic polymeric substance containing cationic groups such as chitosan in the water, the flocs can be grown to a large size. Further, by addition of the flocculating agent, big hard flocs can be precipitated.

When ferrous sulfate is used as the reducing agent and is added to the water, the high polyvalent cations are reduced to low polyvalent cations to form hydroxides. Part of the polyvalent cations react with the anionic groups of the anionic group-containing hydrophilic polymeric substance to form insoluble salts of the polymer and to form precipitates. In this case, since iron contained in the reducing agent is converted into a hydroxide and is insolubilized, the flocs grow in size and the precipitation thereof is accelerated.

The final pH of the water after the treatment is generally in the range of 7-12 and varies with the amounts of the polyvalent cations to be removed and the removing agent added. Thus, the pH depends upon the relationship between the pH of the hydroxides and the solubility thereof. As a pH controlling agent, an alkaline substance such as sodium hydroxide, potassium hydroxide, sodium carbonate, potassium carbonate, calcium hydroxide or magnesium hydroxide is used. These alkaline substances are added to water in the form of powder, an aqueous solution or an emulsion.

When the removing agent of the present invention is added to an alkaline water, the alkaline water is first added with a pH controlling agent to adjust the pH of the water to be treated to a range of 1-7, preferably 2-4. The pH-adjusted water to be treated is then treated with the removing agent of the present invention in the same manner as above. An acidic substance such as hydrochloric acid, sulfuric acid or nitric acid is used as the pH controlling agent.

The removing agent according to the present invention is mainly used for removing harmful polyvalent cations but can also be used for removing fluorine ions (F⁻), arsenious ions and arsenic ions. When the removing agent does not at all contain non-harmful polyvalent metal ions such as iron ions, calcium ions, magnesium ions or aluminum ions, or when the amount of these ions contained therein is insufficient, it is desirable to add a polyvalent metal compound capable of generating such polyvalent ions simultaneously, before or after the addition of the removing agent so as to insolubilize the harmful ions. The harmful ions may be adsorbed on surfaces of the flocs of metal hydroxides and the dispersed anionic group-containing hydrophilic polymeric substance so as to be insolubilized and separated from the water.

In the present invention, polyvalent cation-containing waste water used as a water to be treated may be, for example, waste water discharged from various factories such as iron-steel factories, non-iron metal factories and electrical manufacturing factories, waste water discharged from plating factories or waste water discharged from various institutes. The polyvalent cations include various polyvalent ions of metals such as Cu, Zn, Cd, Pd, Ag, Al, Cr, Pb, Mn, Fe, Ni, Th, U and Pu and thus include any metals capable of forming precipitates of hydroxides. Specific examples of polyvalent cations include ferric ions (Fe³⁺), aluminum ions (Al³⁺) and chromium ions (Cr⁶⁺).

The water to be treated may be water containing fluorine ions or arsenic ions.

### Example

The present invention will be next described in detail by examples. The following examples will further illustrate the present invention but are not intended to be limiting the present invention as claimed.

### Reference Example 1

Into a flask, 0.2 g of chitosan (deacetylation degree: 85 mole %, number average molecular weight: 580,000) was charged, to which a hydrochloric acid salt of diethylaminoethyl chloride was added in an amount of 5-fold moles of the glucosamine units of the chitosan. Further, 10 ml of water and, thereafter, 1.5 ml of 2N aqueous sodium hydroxide solution were added to the flask. The mixture was then reacted at 60°C for 2 hours with stirring so that the chitosan powder was solubilized to obtain a reaction solution having a pH of about 5.0.

To the reaction solution was added an aqueous glutaraldehyde solution (0.5 % by weight) in an amount of about 0.012 mole, in terms of the mole number of glutaraldehyde, per mole of glucosamine units of the chitosan, and the mixture was reacted at 40°C for 2 hours with shaking. An aqueous solution containing crosslinked chitosan was thus obtained. The analysis revealed that the crosslinked chitosan contained 41 mole % of a primary amino group, 42 mole % of a diethylaminoethyl group and 1.6 mole % of a crosslinking group derived from dialdehyde.

### Description of Chemicals Used:

### (1) Anionic group-containing hydrophilic polymeric substance A:

Mixed powder (average particle size: about 35 µm) containing 96 parts by weight of sodium alginate (manufactured by Pronova Biopolymer Inc., molar ratio [M]/[G] of mannuronic acid (M) to guluronic acid (G): 1/1) with 4 parts by weight of gellan gum (manufactured by Kelco Inc.)

### (2) Water-soluble non-harmful polyvalent metal compound A:

Ferrous sulfate heptahydrate

### (3) Cationic group-containing hydrophilic polymeric substance A:

Aqueous solution of crosslinked chitosan obtained in Reference Example 1 above

### (4) Removing agent [I]:

Mixture of 12 % by weight of the anionic group-containing hydrophilic polymeric substance A with 88 % by weight of the water-soluble non-harmful polyvalent metal compound A

### (5) Removing agent [II]:

Mixture of 50 % by weight of Removing agent [I] with 50 % by weight of sodium bisulfite

### (6) Removing agent [III]:

Mixture of 12 % by weight of pectin with 88 % by weight of ferrous sulfate heptahydrate

### (7) Removing agent [IV]:

Mixture of 12 % by weight of polyacrylic acid with 88 % by weight of ferrous sulfate heptahydrate

### (8) Removing agent [V]:

Mixture of 12 % by weight of sodium alginate with 88 % by weight of ferrous sulfate heptahydrate

### (9) Removing agent [VI]:

Mixture of 50 % by weight of sodium alginate with 50 % by weight of ferrous sulfate heptahydrate

### Treatment Example 1

Water [W(1)] having the following properties was used as water to be treated:

| | | |
|---|---|---|
| (1) | pH: | 2.6 |
| (2) | Concentration of hexavalent chromium (ppm): | 242 |

The water to be treated (1 liter) was mixed with a predetermined amount of the removing agent [I] or [II] and the mixture was stirred for 5 minutes. Then the mixture was adjusted with sodium hydroxide to pH 10, to which the cationic group-containing hydrophilic polymeric substance A. (aqueous solution of crosslinked chitosan) was added in an amount of 60 mg in terms of the weight of chitosan. The resulting mixture was stirred for 1 minute and filtered with a filter paper of 5C. The filtrate was analyzed for chromium content to give the results summarized in Table 1.

**Table 1**

| Removing agent [I] | | Removing agent [II] | |
|---|---|---|---|
| Amount added (mg) | Concentration of Cr (ppm) | Amount added (mg) | Concentration of Cr (ppm) |
| 0 | 242.0 | 0 | 242.0 |
| 1,000 | 191.1 | 400 | 178.3 |
| 2,000 | 127.4 | 1,200 | 18.7 |
| 3,000 | 65.7 | 1,300 | 2.5 |
| 4,000 | 13.4 | 1,400 | <0.02 |
| 4,500 | 0.05 | 1,500 | <0.02 |
| 5,000 | <0.02 | 1,600 | <0.02 |

From the results shown in Table 1, it will be appreciated that the removing agent [II] containing sodium bisulfite is more effective than the removing agent [I] even with a smaller amount. This means that the amount of the non-harmful polyvalent metal compound added can be reduced, so that the amount of the sludge formed can be reduced.

### Treatment Example 2

Water [W(2)] having the following properties was used as water to be treated:

| | | |
|---|---|---|
| (1) | pH: | 2.45 |
| (2) | Oxidation-reduction potential (mV): | 320 |
| (3) | Concentration of hexavalent chromium (ppm): | 109,100 |
| (4) | Concentration of total chromium (ppm): | 115,089 |

The water to be treated [W(2)] was diluted to a 50-fold volume. The diluted water (1 liter) was mixed with 20 g of the removing agent [II] and the mixture was stirred for 5 minutes. Then the mixture was adjusted with sodium hydroxide to pH 10, to which the cationic group-containing hydrophilic polymeric substance A (aqueous solution of crosslinked chitosan) was added in an amount of 0.1 g in terms of the weight of chitosan. The resulting mixture was stirred for 1 minute and filtered with a filter paper of 5C. The filtrate was analyzed for chromium content to give the results summarized in Table 2.

### Treatment Example 3

The water to be treated [W(2)] was diluted to a 100-fold volume. The procedure of Treatment Example 2 was repeated in the same manner as described except that the diluted water (1 liter) was mixed with 10 g of the removing agent [II]. The results are shown in Table 2.

### Treatment Example 4

The water to be treated [W(2)] was diluted to a 500-fold volume. The procedure of Treatment Example 2 was repeated in the same manner as described except that the diluted water (1 liter) was mixed with 3.5 g of the removing agent [II]. The results are shown in Table 2.

### Treatment Example 5

The water to be treated [W(2)] was diluted to a 1,000-fold volume. The procedure of Treatment Example 2 was repeated in the same manner as described except that the diluted water (1 liter) was mixed with 3 g of the removing agent [II]. The results are shown in Table 2.

### Treatment Example 6

The water to be treated [W(2)] was diluted to a 5,000-fold volume. The procedure of Treatment Example 2 was repeated in the same manner as described except that the diluted water (1 liter) was mixed with 2 g of the removing agent [II]. The results are shown in Table 2.

### Treatment Example 7

The water to be treated [W(2)] was diluted to a 10,000-fold volume. The procedure of Treatment Example 2 was repeated in the same manner as described except that the diluted water (1 liter) was mixed with 1 g of the removing agent [II]. The results are shown in Table 2.

**Table 2**

| Treatment Example No. | Concentration of hexavalent Cr (ppm) | | Concentration of total Cr (ppm) | |
|---|---|---|---|---|
| | Before treatment | After treatment | Before treatment | After treatment |
| 2 | 2,182 | <0.02 | 2,302 | <0.02 |
| 3 | 1,091 | <0.02 | 1,151 | <0.02 |
| 4 | 218 | <0.02 | 230 | <0.02 |
| 5 | 109 | <0.02 | 115 | <0.02 |
| 6 | 22 | <0.02 | 23 | <0.02 |
| 7 | 11 | <0.02 | 12 | <0.02 |

### Reference Example 2

The amount of precipitates produced in each of Treatment Examples 2-7 was measured. The precipitates were separated from the treated water and then dried for measuring the amount. The results are shown in Table 3.

**Table 3**

| Treatment Example No. | Weight after Filtration (g) | Weight after drying (g) | Water content of precipitate (%) |
|---|---|---|---|
| 2 | 217.2 | 12.8 | 94.1 |
| 3 | 118.8 | 6.2 | 94.8 |
| 4 | 48.6 | 1.6 | 96.7 |
| 5 | 44.7 | 1.1 | 97.5 |
| 6 | 39.0 | 0.9 | 97.7 |
| 7 | 32.0 | 0.7 | 97.8 |

### Treatment Example 8

In Treatment Examples 1-7, the removing agent [I] or [II] was added to the water to be treated after having been dispersed in water in an undissolved state. It was confirmed that there was no change in chromium removing efficiency. Thus, no difference was observed in effect.

### Treatment Example 9

In Treatment Examples 1-8, the crosslinked chitosan was replaced by commercially available chitosan as the cationic group-containing polymeric substance. No significant difference was observed in the chromium removing efficiency. However, the floc forming efficiency was better when the crosslinked chitosan was used.

### Treatment Example 10

In Treatment Examples 1-8, sodium alginate was used by itself as the anionic group-containing polymeric substance in lieu of the mixture of sodium alginate with the gellan gum. No significant difference was observed in the chromium removing efficiency. However, the floc forming efficiency was better when the mixture of sodium alginate with gellan gum was used.

### Treatment Example 11

To water to be treated (1 liter) containing lead, zinc, copper and nickel each in an amount of 100 ppm, 400 ppm of the removing agent [V] containing sodium alginate as the anionic group-containing hydrophilic polymeric substance and ferrous sulfate heptahydrate as the non-harmful polyvalent metal compound was added. The mixture was stirred for 5 minutes and then adjusted with sodium hydroxide to a pH of 10. After solid-liquid separation, the treated water was measured for remaining ion concentrations. Good results were obtained as follows:
- Pb:: 0.015 ppm
- Zn:: 0.008 ppm
- Cu:: 0.001 ppm
- Ni:: 0.029 ppm

### Treatment Example 12

To water to be treated (1 liter) containing lead, zinc, copper and nickel each in an amount of 100 ppm, 400 ppm of the removing agent [III] containing pectin as the anionic group-containing hydrophilic polymeric substance and ferrous sulfate heptahydrate as the non-harmful polyvalent metal compound was added. The mixture was stirred for 5 minutes and then adjusted with sodium hydroxide to a pH of 10. After solid-liquid separation, the treated water was measured for remaining ion concentrations. Good results were obtained as follows:
- Pb:: 0.020 ppm
- Zn:: 0.015 ppm
- Cu:: 0.010 ppm
- Ni:: 0.045 ppm

When the removing agent [III] in which the pectin was substituted by pectic acid or pectinic acid was used, similar results were found to be obtained.

### Treatment Example 13

To water to be treated (1 liter) containing lead, zinc, copper and nickel each in an amount of 100 ppm, 400 ppm of the removing agent [IV] containing polyacrylic acid as the anionic group-containing hydrophilic polymeric substance and ferrous sulfate heptahydrate as the non-harmful polyvalent metal compound was added. The mixture was stirred for 5 minutes and then adjusted with sodium hydroxide to a pH of 10. After solid-liquid separation, the treated water was measured for remaining ion concentrations. Good results were obtained as follows:
- Pb:: 0.030 ppm
- Zn:: 0.020 ppm
- Cu:: 0.010 ppm
- Ni:: 0.043 ppm

When the removing agent [IV] in which the polyacrylic acid was substituted by a copolymer of acrylamide with acrylic acid was used, similar results were found to be obtained.

### Treatment Example 14

To water to be treated (1 liter) containing lead, zinc, copper and nickel each in an amount of 100 ppm, 400 ppm of the removing agent [III] containing sodium alginate as the anionic group-containing hydrophilic polymeric substance and ferrous sulfate heptahydrate as the non-harmful polyvalent metal compound and previously dispersed in water was added. The mixture was stirred for 5 minutes and then adjusted with sodium hydroxide to a pH of 10. After solid-liquid separation, the treated water was measured for remaining ion concentrations. Good results were obtained as follows:
- Pb:: 0.016 ppm
- Zn:: 0.009 ppm
- Cu:: 0.001 ppm
- Ni:: 0.028 ppm

### Treatment Example 15

Each of Treatment Examples 11-14 was repeated in the same manner as described except that, before the addition of the anionic group-containing hydrophilic polymeric substance, 10 ppm of chitosan was added to the water to be treated. No substantial difference was found to be observed with respect to the heavy metal removing efficiency. However, the flocs were found to become very big.

### Treatment Example 16

Each of Treatment Examples 11-14 was repeated in the same manner as described except that 0.1 g of floc precipitation accelerating agent (baryte, average particle diameter: 44 µm). It was confirmed that the precipitation of flocs produced was accelerated by the action of the precipitation accelerating agent.

### Treatment Example 17

To water to be treated (1 liter) containing lead, zinc, copper and nickel each in an amount of 500 ppm as well as 30 ppm of fluorine ions, 80 ppm of chitosan as the cationic group-containing hydrophilic polymeric substance was added. Then, 800 ppm of the removing agent [V] containing sodium alginate as the anionic group-containing hydrophilic polymeric substance and ferrous sulfate heptahydrate as the non-harmful polyvalent metal compound was added. The mixture was stirred for 2 minutes and then further mixed with 3,000 ppm of calcium chloride. The mixture was adjusted with sodium hydroxide to a pH of 10, stirred for 5 minutes and then subjected to solid-liquid separation. The remaining ion concentrations in the treated water were measured to give good results as follows:
- Pb:: 0.032 ppm
- Zn:: 0.001 ppm
- Cu:: 0.001 ppm
- F:: 5.0 ppm

### Example 18

In Treatment Example 17, calcium chloride was added after the pH adjustment to pH 10 with sodium hydroxide. In this case, the fluorine concentration in the treated water was 3 ppm, i.e. the fluorine removing efficiency was found to be improved.

### Treatment Example 19

Waste water (1 liter) from a factory having a pH of 8.9 and containing 2 ppm of cupper ions, 2.2 ppm of iron ions, 2.7 ppm of zinc ions and 31 ppm of fluorine ions was adjusted to pH of 4 or less using sulfuric acid. To this water, 800 ppm of the removing agent [V] containing sodium alginate as the anionic group-containing hydrophilic polymeric substance and ferrous sulfate heptahydrate as the non-harmful polyvalent metal compound was added. The mixture was stirred for 2 minutes and then further mixed with 5,000 ppm of calcium chloride. The mixture was adjusted with sodium hydroxide to a pH of 10, stirred for 15 minutes and then subjected to solid-liquid separation. The remaining ion concentrations of the treated water were measured to give good results as follows:
- Cu:: 0.020 ppm
- Fe:: 0.022 ppm
- Zn:: 0.027 ppm
- F:: 6.3 ppm

### Treatment Example 20

As water to be treated, waste water obtained from a factory and having the following properties was used.

| | | |
|---|---|---|
| (1) | pH: | 1.17 |
| (2) | Lead concentration (ppm): | 239.8 |
| (3) | Zinc concentration (ppm): | 230.6 |
| (4) | copper concentration (ppm): | 2.3 |
| (3) | Nickel concentration (ppm): | 4.0 |

The water to be treated (1 liter), 80 ppm of a cationic group-containing hydrophilic polymeric substance (a 5/3 weight/weight mixture of commercially available chitosan with dimethylaminoethyl ester of polyacrylic acid) was added and the mixture was stirred for 5 minutes. To this mixture, 800 ppm of the removing agent [V] containing sodium alginate as the anionic group-containing hydrophilic polymeric substance and ferrous sulfate heptahydrate as the non-harmful polyvalent metal compound was added. The mixture was stirred for 10 minutes and then adjusted with sodium hydroxide to a pH of 10, and further mixed with 10 ppm of anionic polymer flocculating agent. The mixture was stirred for 3 minutes and then filtered with a filter paper of 5C. The filtrate was analyzed for metal contents to give the results summarized in Table 4.

**Table 4**

| Treatment Example 19 | Before treatment | After treatment with 800 ppm of removing agent [V] |
|---|---|---|
| Pb Concentration (ppm) | 239.8 | 0.06 |
| Zn Concentration (ppm) | 230.9 | 0.01 |
| Cu Concentration (ppm) | 4.3 | 0.01 |
| Ni Concentration (ppm) | 3.7 | 0.01 |

### Treatment Example 21

To waste water (1 liter) from a factory having a pH of 3.0 and containing 678.9 ppm of lead ions, 11.2 ppm of aluminum ions, 128.0 ppm of zinc ions and 260 ppm of fluorine ions was adjusted to pH of 4 or less using sulfuric acid, 100 ppm of the removing agent [V] containing sodium alginate as the anionic group-containing hydrophilic polymeric substance and ferrous sulfate heptahydrate as the non-harmful polyvalent metal compound was added. The mixture was stirred for 2 minutes, adjusted with sodium hydroxide to a pH of 10, and then mixed with 5,000 ppm of calcium chloride. The mixture was stirred for 2 minutes and then subjected to solid-liquid separation. The remaining ion concentrations of the treated water were measured to give good results as follows:
- Pb:: 0.043 ppm
- Al:: 0.98 ppm
- Zn:: 0.002 ppm
- F:: 4 ppm

### Effect of the Invention

According to the present invention, there are obtained significant merits that harmful ions contained in water can be efficiently and swiftly removed with a reduced amount of sludge being produced.

## Claims

1. A method of removing harmful ions contained in water, characterized in that an anionic group-containing hydrophilic polymeric substance is dispersed in said water in an undissolved state, and said harmful ions are insolubilized while maintaining said anionic group-containing hydrophilic polymeric substance in the undissolved state.

2. A method according to claim 1, wherein a water-soluble non-harmful polyvalent metal compound is added to said water.

3. A method according to claim 1 or 2, wherein a hydrophilic polymeric substance containing cationic groups is added to said water.

4. A method according to any one of claims 1-3, wherein a flocculating agent is added to said water.

5. A method according to any one of claims 1-4, wherein a reducing agent capable of reducing harmful polyvalent ions to polyvalent ions having lower valence than said harmful polyvalent ions is added to said water.

6. A method according to any one of claims 1-5, wherein an agent for accelerating precipitation of flocs is added to said water.

7. A method according to any one of claims 1-6, wherein said anionic group-containing hydrophilic polymeric substance is (i) an alginic acid or a salt thereof or (ii) a mixture of an alginic acid or a salt thereof with another anionic group-containing hydrophilic polymeric substance.

8. A method according to any one of claims 1-6, wherein said anionic group-containing hydrophilic polymeric substance is (i) pectin, pectic acid or a salt thereof or (ii) a mixture of pectin, pectic acid or a salt thereof with another anionic group-containing hydrophilic polymeric substance.

9. A method according to any one of claims 1-6, wherein said anionic group-containing hydrophilic polymeric substance is (i) polyacrylic acid, a copolymer of acrylamide and acrylic acid or a salt thereof or (ii) a mixture of polyacrylic acid, a copolymer of acrylamide and acrylic acid or a salt thereof with another anionic group-containing hydrophilic polymeric substance.

10. A method according to any one of claims 2-9, wherein said non-harmful polyvalent metal compound is a divalent iron salt.

11. A method according to any one of claims 3-10, wherein said hydrophilic polymeric substance containing cationic groups is chitosan.

12. A method according to any one of claims 1-11, wherein said anionic group-containing hydrophilic polymeric substance is added to said water maintained at a pH of not greater than 5 and is dispersed in the undissolved state.

13. A method according to any one of claims 1-12, wherein said insolubilization of said harmful ions is performed by addition of an alkaline substance.

14. A method according to claim 13, wherein said alkaline substance is sodium hydroxide.

15. A harmful ion removing agent for use in a method for removing harmful ions according to claim 1, comprising a powder or a liquid containing an anionic group-containing hydrophilic polymeric substance.

16. A harmful ion removing agent according to claim 15, additionally comprising a water-soluble non-harmful polyvalent metal compound.

17. A harmful ion removing agent according to claim 15 or 16, additionally comprising a hydrophilic polymeric substance containing cationic groups.

18. A harmful ion removing agent according to any one of claims 15-17, additionally comprising a flocculating agent.

19. A harmful ion removing agent according to any one of claims 15-18, additionally comprising a reducing agent capable of reducing harmful polyvalent ions to polyvalent ions having lower valence than said harmful polyvalent ions.

20. A harmful ion removing agent according to any one of claims 15-19, additionally comprising an agent for accelerating precipitation of flocs.

21. A harmful ion removing agent according to any one of claims 15-20, wherein said anionic group-containing hydrophilic polymeric substance is (i) an alginic acid or a salt thereof or (ii) a mixture of an alginic acid or a salt thereof with another anionic group-containing hydrophilic polymeric substance.

22. A harmful ion removing agent according to any one of claims 15-20, wherein said anionic group-containing hydrophilic polymeric substance is (i) pectin, pectic acid or a salt thereof or (ii) a mixture of pectin, pectic acid or a salt thereof with another anionic group-containing hydrophilic polymeric substance.

23. A harmful ion removing agent according to any one of claims 15-20, wherein said anionic group-containing hydrophilic polymeric substance is (i) polyacrylic acid, a copolymer of acrylamide and acrylic acid or a salt thereof or (ii) a mixture of polyacrylic acid, a copolymer of acrylamide and acrylic acid or a salt thereof with another anionic group-containing hydrophilic polymeric substance.

24. A harmful ion removing agent according to any one of claims 16-23, wherein said non-harmful polyvalent metal compound is a divalent iron salt.

25. A harmful ion removing agent according to any one of claims 17-24, wherein said hydrophilic polymeric substance containing cationic groups is chitosan.

26. A harmful ion removing agent according to claim 15, comprising a mixture of said anionic group-containing hydrophilic polymeric substance with ferrous sulfate.

27. A harmful ion removing agent according to claim 26, additionally comprising a reducing agent.

28. A harmful ion removing agent according to claim 26 or 27, wherein said anionic group-containing hydrophilic polymeric substance is at least one member selected from (i) alginic acid or a salt thereof, (ii) pectin, (iii) pectic acid or a salt thereof, (iv) polyacrylic acid or a salt thereof, and (v) a copolymer of acrylamide with acrylic acid or a salt thereof.
